# EUROPÄISCHE PATENTSCHRIFT

(11) **EP 3 513 643 B1**
(45) Veröffentlichungstag und Bekanntmachung des Hinweises auf die Patenterteilung: **30.09.2020**
(21) Anmeldenummer: 18401094.0
(22) Anmeldetag: 16.11.2018
(51) Int. Cl.: A01C 15/00, A01C 7/10

(54) **VERTEILMASCHINE**
AGRICULTURAL DISTRIBUTOR
ÉPANDEUR

(30) Priorität: 29.11.2017 DE 102017128213
(43) Veröffentlichungstag der Anmeldung: 24.07.2019
(73) Patentinhaber: Amazonen-Werke H. Dreyer GmbH & Co. KG, 49205 Hasbergen (DE)
(72) Erfinder: Schröder, Olaf, 27798 Hude (DE); Heitkamp, Alexander, 48249 Dülmen (DE)

(56) Entgegenhaltungen:
- DE-A1-102013 105 447
- US-A1- 2014 190 980

## Beschreibung

Die Erfindung betrifft eine Verteilmaschine gemäß dem Oberbegriff des Patentanspruches 1.

Eine derartige Verteilmaschine ist in DE10 2013 105 447A1 beschrieben. Diese als Sämaschine ausgebildete Verteilmaschine weist einen quer zur Fahrtrichtung lang gestreckten Vorratsbehälter auf. Der Vorratsbehälter wird zur Bevorratung von Saatgut genutzt und ist in seinem unteren Bereich mit Auslassöffnungen versehen. Jeder Auslassöffnung ist hierbei ein Dosierelement zugeordnet. Dadurch, dass der untere Bereich des Vorratsbehälters trichterförmig ausgebildet ist, rutscht das Saatgut unter dem Einfluss der Schwerkraft durch die Auslassöffnungen in die Dosierelemente. So ergibt sich für jedes Dosierelement ein Bereich, der sich von der zugehörigen Auslassöffnung trichterförmig nach oben erstreckt, aus dem primär Saatgut eingezogen wird. Weiter ist der Vorratsbehälter mit einer Längsverstrebung in seiner Mitte ausgebildet, um diesem mehr Stabilität zu verleihen.

Nachteilig ist hierbei, dass der Vorratsbehälter sich im Einsatz nicht gleichmäßig über seine Breite entleert. Dies ist besonders nachteilig, da so im Einsatz Betriebszustände eintreten in denen durch einzelne Auslassöffnungen nicht ausreichend oder gar kein Saatgut zu den Dosierelementen nachrutscht und somit eine unerwünschte, ungleichmäßige Ausbringung entsteht. Ein solcher Betriebszustand muss aktuell vom Benutzer behoben werden, indem der Ausbringvorgang unterbrochen und die Maschine abgeschaltet wird und das Saatgut manuell, gleichmäßig im Vorratsbehälter verteilt wird. Erst dann kann der Benutzer die Maschine wieder anschalten und den Ausbringvorgang wieder aufnehmen. Der Ausbringvorgang verlängert sich folglich regelmäßig um die Zeit, die benötigt wird, um unerwünschte Betriebszustände zu vermeiden.

Die ungleichmäßige Entleerung des Vorratsbehälters ist zum einen dadurch bedingt, dass sich die Einzugsbereiche der Dosierelemente über die Breite des Vorratsbehälters in ungleichmäßiger Weise überschneiden. Beispielsweise sind an der vormals beschriebenen Sämaschine im zentralen Bereich des Vorratsbehälters keine Dosierelemente vorgesehen, so dass in diesem Bereich im Vergleich zu aneinandergrenzend angeordneten Dosierelementen weniger Saatgut aus dem Vorratsbehälter entnommen wird. Folglich wird im zentralen Bereich über die Zeit weniger Saatgut entnommen als in anderen Bereichen, was dazu führt, dass der Saatgutspiegel in der Mitte langsamer sinkt als in anderen Bereichen des Vorratsbehälters.

Zum anderen behindern Längsverstrebungen im Vorratsbehälter ein ungestörtes Nachrutschen des Saatgutes. Insbesondere behindern die Längsverstrebungen eine gleichmäßige Verteilung in Querrichtung des Vorratsbehälters, was die vorstehend beschriebene Problematik zusätzlich verstärkt. Eine andere gattungsgemäße Verteilmaschine ist aus US2014/0190980 A1 bekannt.

Der Erfindung liegt daher die Aufgabe zugrunde, einen Vorratsbehälter zu schaffen, der sich im Einsatz zumindest annährend gleichmäßig entleert.

Die Aufgabe wird erfindungsgemäß durch eine Verteilmaschine mit den Merkmalen des Anspruchs 1 gelöst. Erfindungsgemäß ist vorgesehen, dass in dem Innenraum des Vorratsbehälters zumindest zwei zumindest eine schräge Leitfläche aufweisende, im Einsatz nicht angetriebene Leitelemente angeordnet sind, dass von der Mitte des Vorratsbehälters aus gesehen jeder Seite des Vorratsbehälters zumindest ein eine schräge Leitfläche aufweisendes Leitelement zugeordnet ist, dass das zumindest eine schräge Leitfläche aufweisende Leitelement jeder Seite des Vorratsbehälters das zu verteilende Material von der Mitte des Vorratsbehälters nach außen leitend positioniert ist.

Infolge dieser Maßnahme wird das Nachrutschen des Saatguts unter dem Einfluss der Schwerkraft nicht nur zur Förderung zu den Dosierelementen genutzt, sondern auch dazu verwendet den Saatgutspiegel im Einsatz gleichmäßig abnehmend zu gestalten. Hierzu werden besonders einfach gestaltete Leitelemente genutzt, die das Saatgut von den Bereichen in denen mehr Saatgut zur Verfügung steht und/oder weniger Saatgut entnommen wird zu den Bereichen leiten, wo der Saatgutspiegel vorrichtungsbedingt schneller sinkt. Dadurch, dass der Saatgutspiegel gleichmäßig abnimmt, werden die Betriebszustände zumindest annährend vermieden oder zumindest minimiert, in denen durch einzelne Auslassöffnungen nicht ausreichend oder gar kein Saatgut zur den Dosierelementen nachrutscht. Somit ist der Benutzer weniger häufig dazu gezwungen den Ausbringvorgang zu unterbrechen und spart folglich Zeit bei selbigem. Weiter ist positiv, dass das Saatgut nicht durch die Leitelemente geschädigt wird, da diese im Einsatz nicht angetrieben sind.

In einer vorteilhaften Weiterbildung der Erfindung ist vorgesehen, dass das Leitelement jeder Seite des Vorratsbehälters zumindest annährend beliebig auf der schrägen Behälterwand positionierbar ist. Eine so ausgebildete Ausführungsform der Erfindung weist den Vorteil auf, dass die Positionierung der Leitelemente auf das einzufüllende Saatgut und vor allem auf die einzufüllende Saatgutmenge abstimmbar ist. Des Weiteren können die Leitelemente so positioniert werden, dass die Störwirkung der Längsverstrebungen abgeschwächt wird, indem die Leitelemente das Saatgut durch vorhandene Durchlässe in den Längsverstrebungen leiten und so an den Flächen der Verstrebungen selber vorbei leiten.

In einer weiteren besonders vorteilhaften Weiterbildung der Erfindung ist das Leitelement jeder Seite des Vorratsbehälters auf zumindest annährend beliebiger Höhe auf der schrägen Behälterwand positionierbar. Beispielsweise sind die Leitelemente jeder Seite im unteren Bereich des Vorratsbehälters zu positionieren falls nur wenig Saatgut eingefüllt wird. In vorteilhafter Weise wird so erreicht, dass das Saatgut über und durch die Leitelemente nachrutschen kann und der Saatgutspiegel annährend gleichmäßig abnimmt.

Erfindungsgemäß ist vorgesehen, dass das Leitelement eine längliche Form aufweist, wobei das Leitelement eine Erhebung von der Behälterwand in Richtung des Behälterinneren bildet und mit Mitteln zur lösbaren Fixierung auf der schrägen Behälterwand versehen ist. In besonders einfacher Weise ist die Auswirkung des Leitelementes auf die Verteilung des Saatgutes im Vorratsbehälter infolge dieser Maßnahme verstärkt. Zum einen vergrößert sich der Einfluss auf die Querverteilung des Saatgutes durch die längliche Form und zum andern erweitert sich auch der Einfluss in Längsrichtung des Vorratsbehälters da das Leitelement eine Erhebung bildet.

Erfindungsgemäß sind die Mittel zur lösbaren Fixierung auf der schrägen Behälterwand als zumindest ein Magnet ausgebildet. In besonders einfacher Weise lässt sich das Leitelement so schnell und sicher von Hand positionieren. Zudem sind keine zusätzlichen Befestigungselemente notwendig und die, die Behälterwand schützende, Lackschicht wird nicht durch Bohrungen zur Arretierung der Leitelemente geschwächt.

Eine weitere Verbesserung der Positionierung der Leitelemente wird dadurch erreicht, dass das Leitelement jeder Seite des Vorratsbehälters unter einem zumindest annährend beliebigen Winkel zu einer Achse, die in der Ebene der schrägen Behälterwand liegt, positionierbar ist. Diese Ausführungsform der Erfindung bietet zusätzliche Anpassungsmöglichkeiten an die Schüttguteigenschaften unterschiedlicher Saatgüter. Durch Variation des Winkels lassen sich die Leitelemente entsprechend der Fließfähigkeit des einzufüllenden Saatgutes anordnen.

Eine zusätzliche, vorteilhafte Weiterbildung ist dadurch gekennzeichnet, dass das Leitelement einen Fuß aufweist, der sich senkrecht zu der Erhebung erstreckt. Durch das Saatgut wirkt in Richtung der Schwerkraft eine Kraft auf die Leitelemente, insbesondere auf die Erhebung der Leitelemente, ein. Verstärkt wird diese Kraft zusätzlich durch die Fallgeschwindigkeit des Saatgutes beim Einfüllvorgang in den Vorratsbehälter. Durch die senkrechte Anordnung des Fußes übt dieser eine Stützwirkung besonders auf die Erhebung aus. In vorteilhafter Weise wird so erreicht, dass die Leitelemente nicht verrutschen oder sich ungeplant durch Abklappen lösen können.

Da durch das stetige Nachrutschen Reibung zwischen dem Saatgut und dem jeweiligen Leitelement entsteht, ist vorgesehen, dass das Leitelement aus einem widerstandsfähigen Werkstoff, vorzugsweise einem verschleißfesten Kunststoff, gebildet ist. Durch diese vorteilhafte Weiterbildung wird erreicht, dass die Leitelemente weniger häufig gewechselt werden müssen und leichtbauend ausgeformt werden können.

In einer weiteren vorteilhaften Weiterbildung der Erfindung ist vorgesehen, dass der Vorratsbehälter zwei zumindest annährend aufrechte Seitenwände aufweist, und dass die von der Mitte des Vorratsbehälters aus gesehen am weitesten außen liegenden Auslauföffnungen zumindest annährend direkt an die Seitenwände des Vorratsbehälters anschließen. Infolge dieser Maßnahme wird erreicht, dass auch in den Bereichen, die bei nicht erfindungsgemäßen Verteilmaschinen zuerst leer laufen, Auslassöffnungen angeordnet sind. Somit stehen in zweckmäßiger Weise insgesamt mehr Auslauföffnungen zur Verfügung.

Weitere Einzelheiten der Erfindung sind der Beispielsbeschreibung und den Zeichnungen zu entnehmen. Die Zeichnungen zeigen

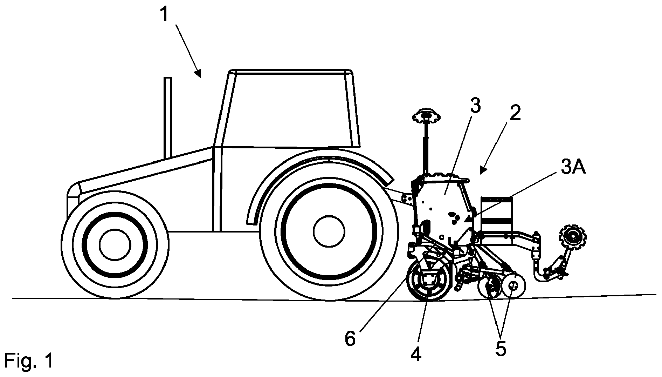

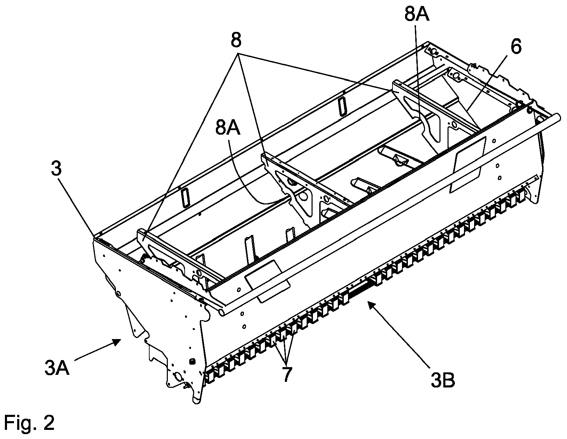

Mehrzahl von Säscharen 5 auf. Der Vorratsbehälter 3 ist lang gestreckt und weist einen, mittels der schrägen Behälterwand 6, trichterförmig zulaufenden, unteren Bereich 3A auf. In dem unteren Bereich 3A sind quer zur Fahrtrichtung Auslassöffnungen mit jeweils einem zugeordneten Dosierelement 7 angeordnet, wie in Fig. 2 zu sehen ist. Im Einsatz ist der Vorratsbehälter 3 der Sämaschine 2 mit Saatgut befüllt und die Dosierelemente 7 befördern das Saatgut zu den Säscharen 5, von wo aus es im Boden abgelegt wird. Das Saatgut rutscht hierbei stetig über die Trichterwände, insbesondere die schräge Behälterwand 6 zu den Auslassöffnungen bzw. den Dosierelementen 7 nach.

Wie in Fig. 2, 3, 4 zu sehen ist, sind die Dosierelemente 7 nicht über die gesamte Breite des Vorratsbehälters 3 im unteren Bereich 3A angeordnet, sondern im mittleren Bereich 3B ist konstruktionsbedingt ein größerer Bereich nicht mit Dosierelementen 7 besetzt. Folglich wird im mittleren Bereich 3B des Vorratsbehälters 3 weniger Saatgut entnommen als in den angrenzenden Bereichen. Weiter ist der Vorratsbehälter 3 mit Längsverstrebungen 8 ausgebildet, die ihm eine gesteigerte Stabilität verleihen. Allerdings führen unter anderem die beiden vorstehend genannten Maßnahmen dazu, dass der Saatgutspiegel 10 im Einsatz nicht gleichmäßig sinkt und das Saatgut nicht ungehindert über die Behälterwand 6 nachrutschen kann. Die Längsverstrebungen 8 sind zwar mit Durchlassöffnungen 8A ausgebildet. Diese Durchlassöffnungen 8A weisen allerdings nur einen geringen Öffnungsquerschnitt auf, welcher im Wesentlichen parallel zur Hauptbewegungsrichtung des Saatgutes liegt. Sie bieten daher allein nur eine unzureichende Verbesserung des Saatgutstromes.

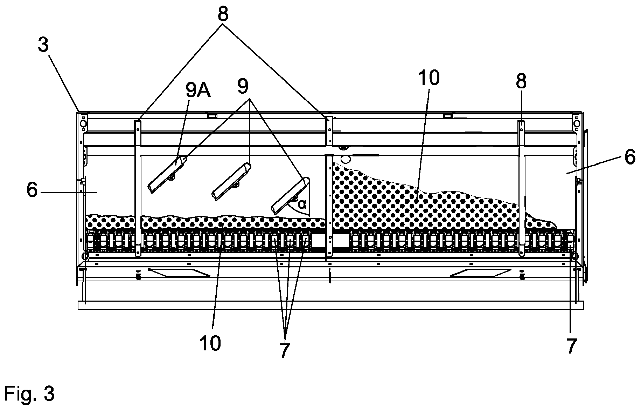

In Fig. 3 ist eine erste Ausführungsform eines Vorratsbehälters 3 zu sehen, wobei nur die linke Hälfte mit erfindungsgemäßen Leitelementen 9 ausgerüstet ist, um anhand der rechten Hälfte zu verdeutlichen welche Probleme ohne die Leitelemente 9 auftreten. Die Auswirkungen der oben beschriebenen Problematik sind somit in der rechten Hälfte, ohne Leitelemente 9 zu erkennen. Der Saatgutspiegel 10 nimmt von der Mitte nach außen hin ab, wobei sich an der rechten Längsverstrebung 8 ein Sprung des Saatgutspiegels 10 einstellen kann. Zusammenfassend führt dies dazu, dass in das am weitesten außen rechts angeordnete Dosierelement 7 zu einem Zeitpunkt im Einsatz kein Saatgut mehr nachrutscht, in dem noch Saatgut im Vorratsbehälter 3 in ausreichender Menge vorhanden ist. Der Benutzer ist gezwungen den Ausbringvorgang zu unterbrechen und manuell einen gleichmäßigen Saatgutspiegel 10 herzustellen, wie er sich in der linken Hälfte mit Leitelementen 9 einstellt. Erfindungsgemäß ist daher vorgesehen, dass jeder Seite des Vorratsbehälters 3 zumindest ein Leitelement 9 zugeordnet ist, wobei das Leitelement 9 nicht angetrieben ist, eine schräge Leitfläche 9A aufweist und so positioniert ist, dass das Saatgut von der Mitte nach außen geleitet wird.

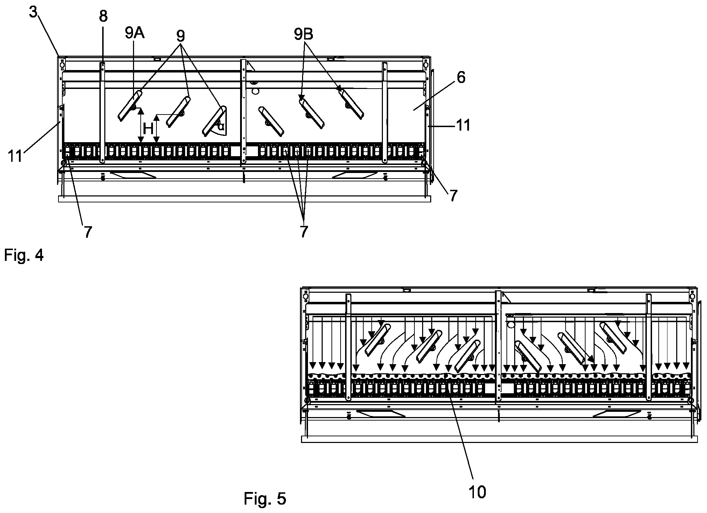

In Fig. 4 ist eine erfindungsgemäße, zweite Ausführungsform eines Vorratsbehälters 3 zu sehen. Jeder Seite des Vorratsbehälters 3 sind in dieser Ausführungsform drei Leitelemente 9 zugeordnet. Die länglichen Leitelemente 9 bilden hierbei jeweils eine Erhebung 9B senkrecht zu der Behälterwand 6 und lassen sich dank ihnen zugeordneter Mittel zur lösbaren Fixierung zumindest annährend beliebig auf der Behälterwand 6 positionieren. Bei der Positionierung der Leitelemente 9 kann sowohl die Höhe H auf der schrägen Behälterwand 6, als auch der Winkel **α** zumindest annährend beliebig an das zu verteilende Saatgut angepasst werden. Dies bietet zahlreiche Anpassungsmöglichkeiten bei der Positionierung der Leitelemente 9. Beispielsweise ist in Fig. 3 zu sehen, dass die Leitelemente 9 unter einem größeren Winkel **α** angeordnet sind als die Leitelemente 9 in Fig. 4. Der Winkel **α** wird hierbei vorrangig mit Hinblick auf die Fließfähigkeit eines zu verteilenden Saatgutes angepasst, während die Höhe H sich vorrangig nach der dem Pegel des sich nach der Befüllung des Vorratsbehälters 3 einstellenden Saatgutspiegels 10 richtet.

Wird nun im Einsatz in den beschriebenen und mit Leitelementen 9 ausgestatteten Vorratsbehälter 3, wie er auch in Fig. 5 zu sehen ist, Saatgut eingefüllt, rutscht dieses über die Leitelemente 9 in geeignetem Maße von der Mitte nach außen. Der Saatgutstrom über die Leitelemente 9 ist durch die Pfeile angedeutet. In der Folge stellt sich im Einsatz kurz vor Ende des Ausbringvorganges ein ebenso gleichmäßiger Saatgutspiegel 10, wie in Fig. 3 auf der linken Seite ein. Somit wird verhindert, dass einzelne Dosierelemente 7 im Einsatz frühzeitig nicht ausreichend mit Saatgut versorgt sind. Folglich muss der Benutzer den Ausbringvorgang nicht unterbrechen. Diese erfindungsgemäße Ausführungsform des Vorratsbehälters 3 weist des Weiteren zwei aufrechte Seitenwände 11 auf. Infolge der oder zumindest einer der vormals beschriebenen Maßnahmen ist die aus der Mitte gesehen am weitesten außen liegende Auslauföffnung bzw. das ihr zugeordnete Dosierelement 7 direkt neben der jeweiligen Seitenwand 11 positioniert. In vorteilhafter Weise ist die Gesamtanzahl von Dosierelementen 7 somit erhöht.

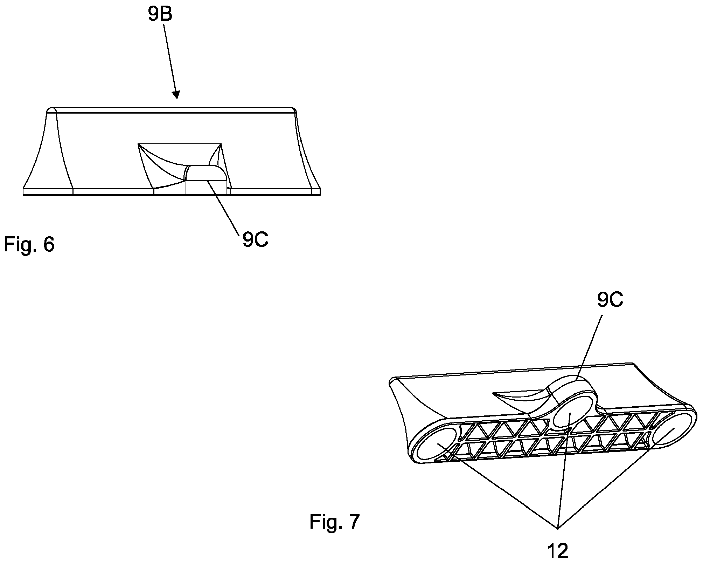

In Fig. 6 und Fig. 7 ist eine erfindungsgemäße Ausführungsform eines Leitelementes 9 zu sehen. Das Leitelement 9 weist einen Fuß 9C auf. Dieser Fuß 9C erstreckt sich senkrecht zu der Erhebung 9B und sichert so eine feste Positionierung. Im Speziellen verhindert der Fuß 9C, dass das Leitelement 9 unter der Kraft, die von dem Saatgut, insbesondere in Richtung der Schwerkraft, auf die Leitfläche 9A und die Erhebung 9B wirkt, abklappt. Als Mittel zur lösbaren Fixierung ist die in Fig. 6 und Fig. 7 gezeigte Ausführungsform des Leitelementes 9 mit drei Magneten 12 versehen. Die Magneten 12 sind versenkt in dem Leitelement 9 verklebt und schließen so bündig zur Unterseite ab. In besonders einfacher Weise lassen sich die Leitelemente 9 so nahezu beliebig von Hand positionieren. Außerdem ist das Leitelement 9 aus einem verschleißfesten Kunststoff gebildet. So bietet es einerseits ausreichend Widerstand gegen Verschleiß und lässt sich andererseits günstig fertigen. Zudem weist das Leitelement 9 werkstoffbedingt ein geringes Eigengewicht auf und ist zudem hohl ausgeformt. Infolge dieser und/oder vorgenannter Maßnahme(n) ist durch einfach gestaltete Hilfsmittel ein Vorratsbehälter geschaffen, der sich im Einsatz zumindest annährend gleichmäßig entleert.

### Bezugszeichenliste

- 1: Zugmaschine
- 2: Sämaschine
- 3: Vorratsbehälter
- 3A: unterer Bereich
- 3B: mittlerer Bereich
- 4: Walze
- 5: Säschar
- 6: Behälterwand
- 7: Dosierelement
- 8: Längverstrebung
- 8A: Durchlassöffnung
- 9: Leitelement
- 9A: Leitfläche
- 9B: Erhebung
- 10: Saatgutspiegel
- H: Höhe
- **α**: Winkel
- 11: Seitenwand
- 12: Magnet

## Patentansprüche

1. Verteilmaschine, insbesondere Sämaschine (2), mit einem lang gestreckten Vorratsbehälter (3), in dessen unteren Bereich (3A) eine Mehrzahl von Auslassöffnungen mit jeweils zumindest einem zugeordnetem Dosierelement (7) angeordnet ist, wobei der untere Bereich (3A) des Vorratsbehälters (3) durch zumindest eine schräge Behälterwand (6) trichterförmig ausgebildet ist, wobei ein zu verteilendes Material unter dem Einfluss der Schwerkraft über die Trichterwände in die Auslassöffnungen rutscht **dadurch gekennzeichnet, dass** in dem Innenraum des Vorratsbehälters (3) zumindest zwei zumindest eine schräge Leitfläche (9A) aufweisende, im Einsatz nicht angetriebene Leitelemente (9) angeordnet sind, dass von der Mitte des Vorratsbehälters (3) aus gesehen jeder Seite des Vorratsbehälters (3) zumindest ein eine schräge Leitfläche (9A) aufweisendes Leitelement (9) zugeordnet ist, dass das zumindest eine schräge Leitfläche (9A) aufweisende Leitelement (9) jeder Seite des Vorratsbehälters (3) das zu verteilende Material von der Mitte des Vorratsbehälters (3) nach außen leitend positioniert ist, dass das Leitelement (9) eine längliche Form aufweist, dass das Leitelement (9) mit als zumindest ein Magnet (12) ausgebildeten Mitteln zur lösbaren Fixierung auf der schrägen Behälterwand (6) versehen ist, dass das Leitelement (9) eine Erhebung (9B) von der Behälterwand (6) in Richtung des Behälterinneren bildet.

2. Verteilmaschine nach Anspruch 1, **dadurch gekennzeichnet, dass** das Leitelement (9) jeder Seite des Vorratsbehälters (3) zumindest annährend beliebig auf der schrägen Behälterwand (6) positionierbar ist.

3. Verteilmaschine nach einem der vorstehenden Ansprüche, **dadurch gekennzeichnet, dass** das Leitelement (9) jeder Seite des Vorratsbehälters (3) auf zumindest annährend beliebiger Höhe (H) auf der schrägen Behälterwand (6) positionierbar ist.

4. Verteilmaschine nach einem der vorstehenden Ansprüche, **dadurch gekennzeichnet, dass** das Leitelement (9) jeder Seite des Vorratsbehälters (3) unter einem zumindest annährend beliebigen Winkel (a) zu einer Achse, die in der Ebene der schrägen Behälterwand (6) liegt, positionierbar ist.

5. Verteilmaschine nach einem der vorstehenden Ansprüche, **dadurch gekennzeichnet, dass** das Leitelement (9) einen Fuß (9C) aufweist, der sich senkrecht zu der Erhebung (9B) erstreckt.

6. Verteilmaschine nach einem der vorstehenden Ansprüche, **dadurch gekennzeichnet, dass** das Leitelement (9) aus einem widerstandsfähigem Werkstoff, vorzugsweise einem verschleißfestem Kunststoff, gebildet ist.

7. Verteilmaschine nach einem der vorstehenden Ansprüche, **dadurch gekennzeichnet, dass** der Vorratsbehälter (3) zwei zumindest annährend aufrechte Seitenwände (11) aufweist, dass die von der Mitte des Vorratsbehälters (3) aus gesehen am weitesten außen liegenden Auslauföffnungen zumindest annährend direkt an die Seitenwände (11) des Vorratsbehälters (3) anschließen.

## Claims

1. Distribution machine, in particular seed drill (2), having an elongate storage container (3), in the lower region (3A) of which a plurality of outlet openings each with at least one associated metering element (7) are arranged, wherein the lower region (3A) of the storage container (3) is formed in a hopper-like manner by at least one inclined container wall (6), wherein a material to be distributed slides into the outlet openings via the hopper walls under the influence of gravity, **characterized in that**, in the interior of the storage container (3), at least two guiding elements (9) that have at least one inclined guiding face (9A) and are not driven in use are arranged, **in that**, as seen from the middle of the storage container (3), each side of the storage container (3) is assigned at least one guiding element (9) having an inclined guiding face (9A), **in that** the guiding element (9), having at least one inclined guiding face (9A), on each side of the storage container (3) is positioned in a manner guiding the material to be distributed outwards from the middle of the storage container (3), **in that** the guiding element (9) has an elongate shape, **in that** the guiding element (9) is provided with means, in the form of at least one magnet (12), for releasable fixing to the inclined container wall (6), and **in that** the guiding element (9) forms an elevation (9B) from the container wall (6) in the direction of the container interior.

2. Distribution machine according to Claim 1, **characterized in that** the guiding element (9) on each side of the storage container (3) is able to be positioned at least approximately as desired on the inclined container wall (6).

3. Distribution machine according to either of the preceding claims, **characterized in that** the guiding element (9) on each side of the storage container (3) is able to be positioned at least approximately at any desired height (H) on the inclined container wall (6).

4. Distribution machine according to one of the preceding claims, **characterized in that** the guiding element (9) on each side of the storage container (3) is able to be positioned at least approximately at any desired angle (α) to an axis that lies in the plane of the inclined container wall (6).

5. Distribution machine according to one of the preceding claims, **characterized in that** the guiding element (9) has a foot (9C), which extends perpendicularly to the elevation (9B).

6. Distribution machine according to one of the preceding claims, **characterized in that** the guiding element (9) is formed from a resistant material, preferably from a wear-resistant plastic.

7. Distribution machine according to one of the preceding claims, **characterized in that** the storage container (3) has two at least approximately upright side walls (11), **in that** the outlet openings that are located outermost as seen from the middle of the storage container (3) adjoin the side walls (11) of the storage container (3) at least approximately directly.

## Revendications

1. Machine de distribution, en particulier machine de semage (2), comprenant un réservoir allongé (3), dans la région inférieure (3A) duquel est ménagée une pluralité d'ouvertures de sortie pourvues chacune d'au moins un élément de dosage associé (7), la région inférieure (3A) du réservoir (3) étant formée en entonnoir par au moins une paroi de réservoir inclinée (6),
un matériau à distribuer glissant sous l'effet de la gravité sur les parois d'entonnoir jusque dans les ouvertures de sortie, **caractérisé en ce que** au moins deux éléments directeurs (9), qui comportent au moins une surface directrice inclinée (9A) et qui ne sont pas entraînés pendant l'utilisation, étant disposés dans l'espace intérieur du réservoir (3), **en ce qu'**au moins un élément directeur (9) qui comporte une surface directrice inclinée (9A) est associé à chaque côté du réservoir (3) lorsque l'on regarde depuis le centre du réservoir (3), **en ce que** l'élément directeur (9), comportant au moins une surface directrice inclinée (9A), de chaque côté du réservoir (3) positionne le matériau à distribuer en le dirigeant du centre du réservoir (3) vers l'extérieur, **en ce que** l'élément directeur (9) a une forme allongée, **en ce que** l'élément directeur (9) est pourvu de moyens conçus comme au moins un aimant (12) et destinés à être fixés de manière amovible à la paroi de réservoir inclinée (6) de sorte que l'élément directeur (9) forme une élévation (9B) depuis la paroi de réservoir (6) en direction de l'intérieur de réservoir.

2. Machine de distribution selon la revendication 1, **caractérisée en ce que** l'élément directeur (9) de chaque côté du réservoir (3) peut être positionné au moins approximativement de manière quelconque sur la paroi de réservoir inclinée (6).

3. Machine de distribution selon l'une des revendications précédentes, **caractérisée en ce que** l'élément directeur (9) de chaque côté du réservoir (3) peut être positionné à une hauteur (H) au moins approximativement quelconque sur la paroi de réservoir inclinée (6).

4. Machine de distribution selon l'une des revendications précédentes, **caractérisée en ce que** l'élément directeur (9) de chaque côté du réservoir (3) peut être positionné selon un angle (α) au moins approximativement quelconque par rapport à un axe situé dans le plan de la paroi de réservoir inclinée (6).

5. Machine de distribution selon l'une des revendications précédentes, **caractérisée en ce que** l'élément directeur (9) comporte un pied (9C) qui s'étend perpendiculairement à l'élévation (9B).

6. Machine de distribution selon l'une des revendications précédentes, **caractérisée en ce que** l'élément directeur (9) est formé d'un matériau résistant, de préférence une matière synthétique résistant à l'usure.

7. Machine de distribution selon l'une des revendications précédentes, **caractérisée en ce que** le réservoir (3) comporte deux parois latérales (11) au moins approximativement verticales, **en ce que** les ouvertures de sortie les plus à l'extérieur, lorsque l'on regarde depuis le centre du réservoir (3), se raccordent au moins approximativement directement aux parois de réservoir latérales (11) du réservoir (3).
